# EUROPÄISCHE PATENTSCHRIFT

(11) **EP 4 602 299 B1**
(45) Veröffentlichungstag und Bekanntmachung des Hinweises auf die Patenterteilung: **09.12.2026**
(21) Anmeldenummer: 23783874.3
(22) Anmeldetag: 04.10.2023
(51) Int. Cl.: F24C 7/08, F24C 15/00, H05B 6/64

(54) **GARGERÄT MIT EINEM DOM ZUR BEABSTANDUNG EINER SENSOREINRICHTUNG VON EINER MUFFEL**
COOKING APPLIANCE HAVING A DOME FOR DISTANCING A SENSOR DEVICE FROM A MUFFLE
APPAREIL DE CUISSON PRÉSENTANT UN DÔME POUR L'ÉLOIGNEMENT D'UN DISPOSITIF DE CAPTEUR D'UN MOUFLE

(30) Priorität: 13.10.2022 DE 102022210784
(43) Veröffentlichungstag der Anmeldung: 20.08.2025
(73) Patentinhaber: BSH Hausgeräte GmbH, 81739 München (DE)
(72) Erfinder: VOGT, Matthias, 89423 Gundelfingen Donau (DE); BÖTTCHER, Christian, 83278 Traunstein (DE); KUCHLER, Markus, 83257 Gstadt am Chiemsee (DE); STERZ, Sebastian, 86845 Großaitingen (DE)
(86) Internationale Anmeldenummer: PCT/EP2023/077476
(87) Internationale Veröffentlichungsnummer: WO 2024/078943

(56) Entgegenhaltungen:
- DE-A1- 102019 206 892
- JP-A- 2001 355 850
- JP-B2- 5 800 622

## Beschreibung

Die Erfindung betrifft ein Gargerät mit einem Gehäuse, in welchem ein Garraum ausgebildet ist, wobei der Garraum durch Wände einer Muffel des Gargeräts begrenzt ist. Das Gargerät umfasst wenigstens eine Sensoreinrichtung, welche zum Überwachen eines in dem Garraum durchführbaren Garvorgangs ausgebildet ist. Die wenigstens eine Sensoreinrichtung ist mittels eines Doms des Gargeräts von einer Innenseite einer Wand der Muffel beabstandet. Der Dom weist eine der wenigstens einen Sensoreinrichtung nahe Mündungsöffnung und eine dem Garraum nahe Erfassungsöffnung auf. Ein Verschließelement ist aus einer Freigabestellung in eine Schließstellung bewegbar, wobei in der Freigabestellung ein von der Mündungsöffnung zu der Erfassungsöffnung reichender Erfassungspfad freigegeben ist. Durch Bewegen des Verschließelements in die Schließstellung ist ein Ausmaß einer Wärmeübertragung aus dem Garraum hin zu der wenigstens einen Sensoreinrichtung verringerbar.

Die JP 5800622 B2 beschreibt ein Mikrowellengerät mit einer Luftzufuhröffnung, die in einer Wand einer Heizkammer des Mikrowellengeräts ausgebildet ist. In einem an die Wand angrenzenden Luftzufuhrkanal ist ein Infrarotsensor angeordnet. Mittels einer Verschließeinheit kann die Luftzufuhröffnung verschlossen werden, wenn ein Dampferzeuger des Mikrowellengeräts in Betrieb ist.

Die JP 2001355850 A beschreibt ein Gargerät mit einer Infrarotsensoreinheit, wobei zwischen einem Garraum des Gargeräts und der Infrarotsensoreinheit ein Detektionsrohr angeordnet ist.

Die DE 10 2019 213 485 A1 beschreibt ein Mikrowellengerät mit Mikrowellendom, wobei der Mikrowellendom eine erste Sensoröffnung und eine zweite Sensoröffnung aufweist. Hinter den Sensoröffnungen sind jeweilige Sensoren angeordnet. Zum Verschließen einer Garraumöffnung des Mikrowellendoms ist eine Domabdeckung vorgesehen, die motorisch bewegbar ist.

Die DE 10 2019 206 892 A1 beschreibt ein Gargerät mit außerhalb des Garraums angeordneten Sensoreinheiten. Eine Ausstülpung des Gargeräts kann mittels einer Schutzscheibe verschlossen werden, wobei die innerhalb des Garraums angeordnete Schutzscheibe parallel zu einer Garraumwandung bewegbar ist.

Aufgabe der vorliegenden Erfindung ist, ein Gargerät der eingangs genannten Art zu schaffen, bei welchem eine Beaufschlagung der Sensoreinrichtung mit Wärme besonders weitgehend vermeidbar ist.

Diese Aufgabe wird durch ein Gargerät mit den Merkmalen des Patentanspruchs 1 gelöst. Vorteilhafte Ausgestaltungen mit zweckmäßigen Weiterbildungen der Erfindung sind in den abhängigen Patentansprüchen und in der nachfolgenden Beschreibung angegeben.

Das erfindungsgemäße Gargerät mit einem Gehäuse, in welchem ein Garraum ausgebildet ist, der durch Wände einer Muffel des Gargeräts begrenzt ist, weist wenigstens eine Sensorvorrichtung auf, welche zum Überwachen eines in dem Garraum durchführbaren Garvorgangs ausgebildet ist. Die wenigstens eine Sensorvorrichtung ist mittels eines Doms des Gargeräts von einer Innenseite einer Wand der Muffel beabstandet. Der Dom weist eine der wenigstens einen Sensoreinrichtung nahe Mündungsöffnung und eine dem Garraum nahe Erfassungsöffnung auf. Das Gargerät umfasst ein Verschließelement, welches aus einer Freigabestellung in eine Schließstellung bewegbar ist. In der Freigabestellung ist ein von der Mündungsöffnung zu der Erfassungsöffnung reichender Erfassungspfad freigegeben. Durch Bewegen des Verschließelements in die Schließstellung ist ein Ausmaß einer Wärmeübertragung aus dem Garraum hin zu der wenigstens einen Sensoreinrichtung verringerbar. Wenigstens eine Wandung des Doms, welche einen Innenraum des Doms begrenzt, weist eine Vielzahl von Durchtrittsöffnungen auf.

Das in die Schließstellung bewegte Verschließelement ist in Hochrichtung des Doms von der Mündungsöffnung und von der Erfassungsöffnung beabstandet angeordnet. Aufgrund einer derartigen Anordnung des Verschließelements lassen sich in dem Dom zwei Thermozonen ausbilden. Durch die dem Garraum nahe, erste und relativ heiße Zone oder Thermozone wird eine Wärmeübertragung mittels Wärmestrahlung und Konvektion von dem Garraum hin zu der Mündungsöffnung vermindert. Und in der zweiten, dem Garraum fernen Zone oder Thermozone oder dergleichen Abschnitt des Doms kann eine besonders wirksame aktive Kühlung erreicht werden. Dies liegt daran, dass nur wenig Wärme in diese zweite Zone beziehungsweise diesen zweiten Abschnitt nachströmt. Denn mittels des Verschließelements ist eine sehr gute thermische Entkopplung der zweite Zone oder des zweiten Abschnitts erreichbar.

Aufgrund der vorzugsweise vorgesehenen Verringerung einer Querschnittsfläche des Doms von der Erfassungsöffnung hin zu der Mündungsöffnung, also aufgrund der beispielsweise trichterförmigen Gestalt des Doms, ist wegen der Anordnung des Verschließelements in Hochrichtung zwischen der Mündungsöffnung und der Erfassungsöffnung dafür gesorgt, dass der Verfahrweg zum Verbringen des Verschließelements aus der Freigabestellung in die Schließstellung und zurück immer noch vergleichsweise gering ist. Dies ist vorteilhaft.

Durch das Anordnen des Verschließelements in Hochrichtung des Doms zwischen der Mündungsöffnung und der Erfassungsöffnung kann zudem erreicht werden, dass zum Bereitstellen des Doms zwei Domabschnitte separat gefertigt und aneinander montiert werden können, zwischen welchen das Verschließelement angeordnet ist. Dies eröffnet in vorteilhafter Weise einen großen Gestaltungsspielraum bei der Materialwahl für die Domabschnitte, insbesondere Domhälften.

Das Vorsehen der Durchtrittsöffnung in der wenigstens einen Wandung des Doms führt dazu, dass im Betrieb des Gargeräts, also etwa während des Garvorgangs, Wärme aus dem Garraum besonders weitgehend daran gehindert ist, aufgrund von Wärmeleitung entlang der die Durchtrittsöffnungen aufweisenden Wandung des Doms hin zu der Sensoreinrichtung zu gelangen. Denn aufgrund der in der wenigstens einen Wandung vorgesehenen Durchtrittsöffnungen ist der von der Wärme bei der Wärmeübertragung durch Wärmeleitung zurückzulegende Weg deutlich länger als dies bei einer ansonsten gleichartigen, jedoch nicht die Durchtrittsöffnungen aufweisenden Wandung des Doms der Fall wäre. Daher ist eine Beaufschlagung der Sensoreinrichtung mit Wärme besonders weitgehend vermeidbar.

Dem Bestreben, eine Wärmeübertragung auf die Sensoreinrichtung zu vermeiden, liegt die Erkenntnis zugrunde, dass Sensoreinrichtungen, welche zum Überwachen des in dem Garraum durchführbaren Garvorgangs verwendet werden können, in der Regel empfindlich gegenüber hohen Temperaturen sind. Dies gilt bei Ausbildung der Sensoreinrichtung beispielsweise als Kamera für eine Sensorfläche etwa in Form einer Oberfläche einer Linse der Kamera, aber auch für in die Sensoreinrichtung integrierte elektronische Komponenten, welche insbesondere zur Signalverarbeitung ausgebildet sein können. Bei einer als Schallsensor oder als Drucksensor ausgebildeten Sensoreinrichtung können wärmeempfindliche Membranen oder dergleichen vorhanden sein, welche es vor einer Beaufschlagung mit Wärme zu schützen gilt.

Gleiches gilt, wenn die wenigstens eine Sensoreinrichtung etwa als Feuchtesensor ausgebildet ist, bei welchem eine Sensorfläche metallisch ausgebildet sein kann. Hier geht es etwa darum, einen Kontakt der Sensorfläche mit, insbesondere heißem, Wasser und/oder mit Dampf zu vermeiden, um eine Oxidation der Sensorfläche möglichst weitgehend zu verhindern. Auch diesbezüglich ist das Vermeiden einer Übertragung von Wärme auf die Sensoreinrichtung vorteilhaft.

In dem Gargerät sorgt zum einen der Dom dafür, dass die wenigstens eine Sensoreinrichtung auf Abstand von der Innenseite der Wand der Muffel gehalten ist. Die Sensoreinrichtung berührt nämlich die Muffelwand erst gar nicht, sodass eine direkte Wärmeleitung von der Wand der Muffel in die Sensoreinrichtung unterbunden ist. Das Vorsehen des Doms sorgt zudem dafür, dass ein Wärmeeintrag hin zu der Sensoreinrichtung aufgrund von Wärmestrahlung zu vernachlässigen ist. Und einer Wärmeübertragung durch Konvektion kann insbesondere und sehr einfach durch eine Bereitstellung von Luftströmungen entgegengewirkt werden, welche einer Wärmeabfuhr von dem Dom und zusätzlich einer Kühlung der Sensoreinrichtung dienen können.

Aufgrund des Anordnens des bewegbaren Verschließelements an dem Dom ist es möglich, das Verschließelement aus der Freigabestellung in die Schließstellung und zurück zu bewegen. In der Schließstellung sorgt das Verschließelement, welches auch Shutter bezeichnet werden kann, für eine zusätzliche thermische Entkopplung der Sensoreinrichtung von dem Garraum. Dies gilt für eine Wärmeübertragung entlang des Doms sowohl über Wärmestrahlung als auch über Wärmeleitung und über Konvektion.

Das Vorsehen der Durchtrittsöffnungen in der wenigstens einen Wandung des Doms ermöglicht es außerdem in vorteilhafter Weise, die Durchtrittsöffnungen für einen Luftdurchtritt zu nutzen, sodass zum einen eine Kühlfunktion erreicht wird und zum anderen ein Abtransport von Wrasen aus dem Garraum ermöglicht ist. Dies ist vorteilhaft.

Das Bereitstellen der Durchtrittsöffnungen in der wenigstens einen Wandung des Doms ermöglicht es insbesondere, zur Kühlung der Sensoreinheit und/oder des Doms einen ohnehin vorhandenen Kühlluftstrom des Gargeräts zu nutzen, ohne dass ein eigener, separater Luftführungskanal oder Luftschacht installiert zu werden bräuchte, um die Kühlluft hin zu dem Dom oder weg von dem Dom zu leiten. Vielmehr kann der die wenigstens eine Wandung mit den Durchtrittsöffnungen aufweisende Dom sehr einfach in eine freie Luftströmung eingebettet werden, welche mittels eines vorzugsweise vorgesehenen Lüfters des Gargeräts erzeugbar ist. Wenn ein derartiger Lüfter ohnehin für eine Kühlluftführung innerhalb des Gargeräts genutzt wird, kann eine Teilhabe an dieser Kühlluftführung vorgenommen werden, um quasi als eine Art Unterfunktion die Kühlung des Doms in ausreichendem Maße sicherzustellen.

Das Vorsehen der Durchtrittsöffnungen in der wenigstens einen Wandung des Doms macht es besonders einfach, den Dom in ein ohnehin vorhandenes Kühlkonzept zu integrieren, welches eine mittels des vorzugsweise vorgesehenen Lüfters bereitstellbare Luftströmung beinhaltet. Es kann hierbei insbesondere eine Umspülung und/oder Durchspülung des Doms mit Kühlluft ausgebildet werden, welche zum Kühlen und zum Abführen von Wrasen ausreichend ist und dennoch einen Hauptluftstrom des übergeordneten Kühlkonzepts so gut wie nicht beeinträchtigt.

Aufgrund des Bereitstellens der Durchtrittsöffnungen in der wenigstens einen Wandung des Doms ist ein atmosphärisch offener Aufbau des Doms erreicht. Dies ermöglicht es, auf eine Installation von aufwendigen, weil etwa druckdichten oder zumindest abgedichteten Luftführkanälen oder Einhausungen zu verzichten. Denn es kann die ohnehin vorhandene Einhausung des übergeordneten Lüftungskonzepts in vorteilhafter Weise mitgenutzt werden.

Der Dom dient in vorteilhafter Weise nicht nur als Träger für das Verschließelement und dem Beabstanden der Sensoreinrichtung von der Innenseite der Wand der Muffel.

Vielmehr sorgt das Vorsehen der Durchtrittsöffnungen in der wenigstens einen Wandung des Doms für eine besonders geringe Wärmeübertragung aufgrund von Wärmeleitung, also für eine sehr geringe Wärmeausleitung aus dem Garraum.

Der Dom kann nach Art einer Ausstülpung ausgebildet sein, welche zumindest bereichsweise in der Wand der Muffel ausgebildet ist. Zusätzlich oder alternativ ist es möglich, den Dom als eigenständiges Bauteil auszubilden, welches mit der Wand der Muffel verbunden wird.

Durch das Vorsehen des Verschließelements kann die Garraumausstülpung beziehungsweise der Dom in vorteilhafter Weise in zwei Abschnitte unterteilt werden, wobei die Abschnitte thermisch, also hinsichtlich der Wärmestrahlung, der Wärmeleitung und der Konvektion, voneinander getrennt werden können, indem das Verschließelement in die Schließstellung bewegt wird.

Gemäß einer nicht erfindungsgemäßen Alternative kann das Verschließelement im Bereich der Mündungsöffnung angeordnet sein. Dies hat bei dem sich vorzugsweise von der Mündungsöffnung zu der Erfassungsöffnung hin verbreiternden Dom den Vorteil, dass ein vergleichsweise kleines Verschließelement ausreichend ist. Zudem braucht ein solches, kleines Verschließelement lediglich entlang eines geringen Verfahrwegs bewegt zu werden, um aus der Freigabestellung in die Schließstellung zu gelangen. Jedoch ist bei einer Anordnung des Verschließelements im Bereich der Mündungsöffnung ungünstig, dass Stauwärme aus dem Garraum vergleichsweise ungehindert in den Innenraum des Doms nach oben steigen kann und eine Wärmeübertragung nach oben erst ganz zum Schluss durch das Verschließelement unterbrochen wird. Demgegenüber ist ein weiterer Vorteil einer Anordnung des Verschließelements im Bereich der Mündungsöffnung oder nahe der Mündungsöffnung darin zu sehen, dass ein Weg für gegebenenfalls von dem Garraum her aufsteigende Verschmutzungen länger ist und somit das Verschließelement weniger stark verschmutzt als dies bei einer dem Garraum näheren Anordnung des Verschließelements der Fall wäre.

Des Weiteren ist es gemäß einer nicht erfindungsgemäßen Alternative möglich, das Verschließelement im Bereich der Erfassungsöffnung anzuordnen. Dies hat den Vorteil, dass durch Verbringen des Verschließelements in die Schließstellung eine sehr gute thermische Entkopplung der Sensoreinrichtung erreicht werden kann. Jedoch geht die Anordnung des Verschließelements im Bereich der Erfassungsöffnung bei einem sich zu dem Garraum hin erweiternden Dom damit einher, dass eine Fläche des Verschließelements vergleichsweise groß ausfällt. Entsprechend ist auch ein großer Hub notwendig, um das Verschließelement aus der Freigabestellung in die Schließstellung und zurück zu verfahren oder zu bewegen. Außerdem ist das Verschließelement schwerer vor Verschmutzungen zu schützen, wenn sich das Verschließelement sehr nahe an der Erfassungsöffnung oder im Bereich der Erfassungsöffnung befindet.

Die mit der Anordnung des Verschließelements auf Abstand von der Mündungsöffnung und von der Erfassungsöffnung einhergehenden Vorteile gelten in besonderem Maße, wenn das in die Schließstellung bewegte Verschließelement bezogen auf einen Abstand der Mündungsöffnung von der Erfassungsöffnung im Wesentlichen mittig angeordnet ist.

Die Hochrichtung des Doms kann, aber braucht nicht mit einer Hochrichtung des Gargeräts zusammenzufallen. Vielmehr sind auch andere Ausrichtungen einer Hochachse des Doms möglich, insbesondere eine schräge Ausrichtung der Hochachse des Doms, welche vorzugsweise auf einen Mittelpunkt des Garraums hin ausgerichtet sein kann. Insbesondere wenn die Sensoreinrichtung als ein von einer Kamera verschiedener Sensor, beispielsweise als Feuchtigkeitssensor oder das Drucksensor, ausgebildet ist, können vergleichsweise starke Abweichungen einer Ausrichtung der Hochachse des Doms von der Hochrichtung des Gargeräts vorgesehen sein, ohne dass dies eine Erfassung von mittels dieser Sensoren erfassbaren Größen beeinträchtigt.

Jedoch auch wenn die Sensoreinrichtung als Kamera ausgebildet ist, kann eine schräge Ausrichtung der Hochachse oder Längsachse des Doms bezogen auf die Hochrichtung des Gargeräts vorgesehen sein. Beispielsweise kann der Dom derart im Bereich einer insbesondere als Garraumdecke ausgebildeten Wand der Muffel angeordnet sein, dass eine Blickrichtung entlang der Hochachse des Doms im Wesentlichen einer Blickrichtung eines Nutzers des Gargeräts entspricht, welcher bei ein Stück weit geöffneter Tür des Gargeräts in den Garraum blickt, um den Zustand von sich in dem Garraum befindendem Gargut zu begutachten. Dementsprechend kann die Hochachse des Doms von der Garraumdecke aus leicht schräg zu einem Garraummittelpunkt hin ausgerichtet sein.

Es kann vorgesehen sein, dass die wenigstens eine Wandung des Doms in einem dem Garraum nahen Teilbereich die Durchtrittsöffnungen aufweist. Dies ist vorteilhaft, da so eine Wärmeleitung dort sehr weitgehend unterbunden wird, wo im Betrieb des Gargeräts, also während des in dem Garraum durchgeführten Garvorgangs, besonders hohe Temperaturen herrschen. Des Weiteren kann durch das Vorsehen der Durchtrittsöffnungen in dem Teilbereich, welcher dem Garraum nahe ist, ein aktives Absaugen von Wrasen aus dem Garraum über den Dom erreicht werden.

Wenn der dem Garraum nahe Teilbereich des Doms in ein Dämmmaterial eingebettet ist, welches einer thermischen Isolierung des Garraums dient, so können vergleichsweise einfache Maßnahmen getroffen werden, um zu verhindern, dass durch die Durchtrittsöffnungen hindurch Wrasen in das Dämmmaterial oder Isoliermaterial gelangt.

Es kann vorgesehen sein, dass die wenigstens eine Wandung des Doms in einem dem Garraum fernen Teilbereich die Durchtrittsöffnungen aufweist. So kann sehr einfach ein Umspülen des dem Garraum fernen Teilbereichs des Doms mit Kühlluft erreicht werden. Zudem können in dem Innenraum des Doms aufsteigendes Kondensat und/oder Wrasen über die in diesem Teilbereich ausgebildeten Durchtrittsöffnungen abgeführt werden, bevor das Kondensat und/oder der Wrasen die Sensoreinrichtung erreichen. Dies ist vorteilhaft.

Als weiter vorteilhaft hat es sich gezeigt, wenn die wenigstens eine Wandung des Doms sowohl in dem Teilbereich, welcher dem Garraum nahe ist, als auch in dem Teilbereich, welcher dem Garraum fern ist, die Durchtrittsöffnungen aufweist. So kann eine Wärmeübertragung hin zu der Sensoreinrichtung über Wärmeleitung, welche in der die Durchtrittsöffnungen aufweisenden Wandung des Doms stattfindet, besonders weitgehend unterbunden werden. Zudem gelten die Vorteile, welche für die Ausbildung der Durchtrittsöffnungen in dem jeweiligen Teilbereich der Wandung erläutert wurden, auch für diese Ausgestaltung.

Vorzugsweise weist der Dom eine Mehrzahl von einander zugewandten Wandungen auf. Hierbei kann vorgesehen sein, dass nur eine dieser Wandungen die Durchtrittsöffnungen aufweist. Bei einer derartigen Ausgestaltung kann sehr einfach dafür gesorgt werden, dass in dem Innenraum des Doms ein Unterdruck erzeugt wird, um in dem Innenraum einen gerichteten Luftstrom auszubilden, welcher für ein Kühlen des Doms und/oder für ein Abführen von Wrasen aus dem Dom genutzt werden kann.

Beispielsweise kann zum Erzeugen des Unterdrucks der Bernoulli-Effekt und/oder das Prinzip des (an sich bekannten und daher vorliegend nicht im Detail erläuterten) Dorade-Lüfters genutzt werden. Zusätzlich oder alternativ kann durch Bereitstellen eines Überdrucks eine Spülung des Innenraums des Doms erreicht werden, etwa um ein Kühlen des Doms zu bewirken.

Alternativ kann vorgesehen sein, dass dann, wenn der Dom eine Mehrzahl von einander zugewandten Wandungen aufweist, zwei dieser Wandungen die Durchtrittsöffnungen aufweisen. Bei einer derartigen Ausgestaltung kann insbesondere ein Durchströmen des Doms mit Kühlluft in Querrichtung, also quer zu dem Erfassungspfad, besonders einfach erreicht werden. Des Weiteren kann insbesondere durch eine derartige Ausgestaltung einfach sichergestellt werden, dass durch einen Überdruck in der Umgebung des Doms in dem Innenraum des Doms eine in den Garraum gerichtete Luftströmung erzeugt wird. So kann besonders effektiv vermieden werden, dass Wrasen aus dem Garraum hin zu der Sensoreinrichtung gelangt.

Insbesondere bei einer Querspülung des Doms mit Kühlluft kann in vorteilhafter Weise ein Spülen eines Objektivs der Kamera erreicht werden, wenn die Sensoreinrichtung als Kamera ausgebildet ist. Dies gilt insbesondere, wenn das Objektiv der Kamera nicht dicht sitzend an der Mündungsöffnung angeordnet ist, sondern an dieser Stelle, also zwischen dem Objektiv der Kamera und der Mündungsöffnung, ein Luftspalt ausgebildet ist. Dadurch kann eine besonders wirkungsvolle Kühlung der Kamera erreicht werden.

Alternativ können dann, wenn der Dom eine Mehrzahl von einander zugewandten Wandungen aufweist, alle Wandungen die Durchtrittsöffnungen aufweisen. Auf diese Weise ist eine besonders weitgehende Reduzierung der Wärmeleitung über die Wandungen des Doms erreichbar. Zudem kann auch bei dieser Ausgestaltung sehr einfach eine kühlende Luftströmung in dem Innenraum des Doms eingestellt werden. Dies ist einer verbesserten Kühlung der Sensoreinrichtung zuträglich.

Die einander zugewandten Wandungen des Doms können insbesondere als quer zu dem Erfassungspfad einander gegenüberliegende Wandungen des Doms ausgebildet sein. Auf diese Weise lässt sich besonders einfach ein Spülen des Innenraums des Doms, insbesondere in Querrichtung des Doms, erreichen.

Vorzugsweise weist das Gargerät wenigstens einen Lüfter auf, welcher dazu ausgebildet ist, in einem zwischen einer Außenseite der Muffel und einer Innenseite des Gehäuses angeordneten Teilraum des Gargeräts eine Luftströmung bereitzustellen. Hierbei ist durch Betreiben des wenigstens einen Lüfters mittels der Luftströmung ein Abführen von Wärme von dem Dom und/oder von der wenigstens einen Sensoreinrichtung bewirkbar. So kann besonders weitgehend verhindert werden, dass Wärme aus dem Garraum auf die wenigstens eine Sensoreinrichtung übertragen wird.

Vorzugsweise ist mittels des Lüfters ein Absaugen von Luft aus dem Innenraum des Doms bewirkbar. So kann zum einen dafür gesorgt werden, dass in dem Innenraum des Doms keine heiße Stauluft vorhanden ist, welche zu einer unerwünschten Wärmeübertragung auf die Sensoreinrichtung führen würde. Des Weiteren kann auf diese Weise ein Absaugen von Wrasen aus dem Garraum des Gargeräts über den Dom erreicht werden.

Zusätzlich oder alternativ kann vorgesehen sein, dass mittels des Lüfters ein Einbringen von Luft in den Innenraum des Doms bewirkbar ist. Auch dies ist einer guten Wärmeabfuhr von dem Dom und/oder von der Sensoreinrichtung zuträglich.

Vorzugsweise ist mittels des Lüfters ein Einbringen von Luft in den Innenraum des Doms über die in einer ersten Wandung des Doms ausgebildeten Durchtrittsöffnungen und ein Abführen der Luft über die in einer zweiten Wandung des Doms ausgebildeten Durchtrittsöffnungen bewirkbar. Hierbei sind die erste Wandung und die zweite Wandung einander zugewandt. So kann in vorteilhafter Weise ein Querspülen des Doms mit Kühlluft in Form der Luftströmung erreicht werden. Dies ist einer effektiven Kühlung des Doms zuträglich und sorgt somit für eine effiziente Verringerung der Wärmeübertragung hin zu der Sensoreinrichtung.

Es kann vorgesehen sein, dass zumindest in einem Teilbereich der Wandung die Durchtrittsöffnungen mittels eines Abdeckelements verdeckt sind, wobei das Abdeckelement ein Hindurchtreten der Luftströmung durch diese Durchtrittsöffnungen unterbindet. Auf diese Weise kann sehr gezielt eingestellt werden, welche Durchtrittsöffnungen lediglich dem Verringern einer Wärmeleitung dienen sollen, und welche Durchtrittsöffnungen als Luftdurchtrittsöffnungen genutzt werden sollen.

Insbesondere kann durch das Vorsehen des wenigstens einen Abdeckelements erreicht werden, dass über die Durchtrittsöffnungen kein Wrasen in ein Isoliermaterial oder Dämmmaterial des Gargeräts gelangt, welches die Muffel außenseitig verkleidet und für eine thermische Isolierung der Muffel sorgt. Des Weiteren kann durch das Vorsehen des wenigstens einen Abdeckelements sehr wirkungsvoll und einfach eine gewünschte Luftströmung durch den Innenraum des Doms hindurch eingestellt werden.

Vorzugsweise weist der Dom einen ersten, dem Garraum nahen Abschnitt und einen zweiten, dem Garraum fernen Abschnitt auf. Hierbei weist die wenigstens eine Wandung in dem ersten Abschnitt ein erstes Material und in dem zweiten Abschnitt ein zweites Material auf, welches von dem ersten Material verschieden ist. So kann sehr wirkungsvoll erreicht werden, dass die in dem jeweiligen Abschnitt verwendeten Materialien für ihren jeweiligen Zweck besonders gut geeignet sind.

Beispielsweise ist es vorteilhaft, wenn das in dem ersten Abschnitt verwendete Material eine besonders geringe Wärmeleitfähigkeit aufweist, insbesondere eine geringere Wärmeleitfähigkeit als das zweite Material. Denn so kann eine Wärmeübertragung aufgrund von Wärmeleitung über die wenigstens eine Wandung des Doms hin zu der wenigstens einen Sensoreinrichtung besonders weitgehend unterbunden werden.

Es kann vorgesehen sein, dass das Gargerät eine Vorrichtung zum Beaufschlagen des Garraums mit Mikrowellen aufweist. Hierbei hat es sich als vorteilhaft gezeigt, wenn der erste Abschnitt eine metallische und/oder elektrisch leitfähige Beschaffenheit aufweist, durch welche ein Austreten von Mikrowellen über den Dom in eine Umgebung des ersten Abschnitts unterbindbar ist. Denn so kann besonders wirksam dafür gesorgt werden, dass Mikrowellenstrahlung bereits in dem Bereich des ersten Abschnitts abgebaut und somit zurückgehalten wird. In dem zweiten Abschnitt ist die Mikrowellenstrahlung vorzugsweise so weit abgebaut, dass eine besonders große Freiheit bei der Auswahl des Materials herrscht, welches in dem zweiten Abschnitt verwendet wird. Beispielsweise kann der zweite Abschnitt aus einem keramischen Material und/oder aus einem Kunststoff gebildet sein.

Der erste Abschnitt kann die metallische und/oder elektrisch leitfähige Beschaffenheit aufweisen, indem der erste Abschnitt aus wenigstens einem Metall gebildet ist. Zusätzlich oder alternativ ist es möglich, dass auf einen Grundkörper der Wandung eine metallische Beschichtung aufgebracht ist. Hierbei kann die metallische Beschichtung an einer dem Innenraum des Doms zugewandten Innenseite des Grundkörpers angeordnet sein und/oder an einer dem Innenraum abgewandten Außenseite des Grundkörpers. In all diesen Fällen sorgt das Vorsehen des metallischen Materials beziehungsweise der metallischen und/oder elektrisch leitfähigen Beschaffenheit für ein wirksames Zurückhalten der Mikrowellenstrahlung, sodass ein Austreten der Mikrowellenstrahlung aus dem Gargerät verhindert ist.

Auch dann, wenn das Gargerät frei von einer Vorrichtung zum Beaufschlagen des Garraums mit Mikrowellen ist, kann vorgesehen sein, dass der erste Abschnitt aus einem Material gebildet ist, welches eine geringere Wärmeleitfähigkeit aufweist als ein für den zweiten Abschnitt verwendetes Material. Dadurch ist eine Wärmeleitung hin zu der Sensoreinrichtung bereits in dem ersten Abschnitt sehr weitgehend verringert. Insbesondere kann es sich bei dem in dem ersten Abschnitt verwendeten Material um ein keramisches Material handeln. Insbesondere wenn das Gargerät frei von der Vorrichtung zum Beaufschlagen des Garraums mit Mikrowellen ist, kann der zweite Abschnitt insbesondere aus einem Kunststoff gebildet sein, beispielsweise aus Polyphenylensulfid (PPS). Denn dies ist im Hinblick auf die Kosten und auf sehr eine einfache, aufwandsarme Bereitstellbarkeit des zweiten Abschnitts vorteilhaft.

Es kann vorgesehen sein, dass das Verschließelement zum Verbringen aus der Freigabestellung in die Schließstellung und zurück linear verfahrbar ist. Hierbei ist das Verschließelement in der Freigabestellung in einer taschenartigen Aufnahme untergebracht. Dadurch kann ein sehr gut geführtes Verbringen des Verschließelements aus der Freigabestellung in die Schließstellung und zurück erreicht werden.

Alternativ kann vorgesehen sein, dass das Verschließelement zum Verbringen aus der Freigabestellung in die Schließstellung und zurück um eine Drehachse drehbar ist, wobei das Verschließelement in der Freigabestellung in einer taschenartigen Aufnahme untergebracht ist. Eine derartige Bewegbarkeit des Verschließelements lässt sich besonders kompakt und bauraumsparend realisieren. Des Weiteren lässt sich etwa durch Vorsehen eines Elektromotors oder dergleichen das Drehen des Verschließelements um die Drehachse zum Bewegen des Verschließelements aus der Freigabestellung in die Schließstellung und zurück technisch sehr einfach realisieren.

Die taschenartige Aufnahme kann insbesondere an einer Wandung des Doms angeordnet oder in der Wandung des Doms ausgebildet sein. So lässt sich das Verschließelement besonders einfach in den Dom integrieren.

Vorzugsweise schirmt das Verschließelement in der Schließstellung zumindest einen Abschnitt des Doms zu dem Garraum hin ab. So kann besonders wirkungsvoll das Ausmaß der Wärmeübertragung aus dem Garraum hin zu der Sensoreinrichtung verringert werden.

Als weiter vorteilhaft hat es sich gezeigt, wenn das Verschließelement nach Art einer Klappe ausgebildet ist, welche um eine Schwenkachse aus der Freigabestellung in die Schließstellung verschwenkbar ist. Die Klappe kann hierbei an einer Innenseite einer der Wandungen des Doms angeordnet sein. Hierbei kann insbesondere durch eine Licht reflektierende Ausbildung wenigstens einer Seite des Verschließelements erreicht werden, dass die Sensoreinrichtung diese spiegelnde Seite des Verschließelements nutzt, um in den Garraum zu blicken.

Insbesondere bei einer Anordnung des als Klappe ausgebildeten Verschließelements an der Erfassungsöffnung des Doms lässt sich das Verbringen des Verschließelements aus der Freigabestellung in die Schließstellung und zurück durch Verschwenken der Klappe um die Schwenkachse sehr einfach und aufwandsarm realisieren.

Bei Ausbildung der Sensoreinrichtung als Kamera lässt sich der in dem Garraum durchgeführte Garvorgang besonders einfach überwachen, etwa indem auf einer Anzeigeeinrichtung des Gargeräts ein mittels der Kamera aufgenommenes Bild dargestellt wird. So kann ein Nutzer des Gargeräts durch Betrachten des Bilds sehr einfach Aufschluss über den Zustand von sich in dem Garraum befindendem Gargut erhalten, ohne dass der Benutzer hierfür eine Tür des Gargeräts zu öffnen braucht, mittels welcher sich eine Beschickungsöffnung der Muffel verschließen lässt.

Vorzugsweise umfasst die wenigstens eine Sensoreinrichtung eine erste Kamera mit einem Bildsensor und eine zweite Kamera mit einem Infrarotsensor. Hierbei weist das Gargerät eine Bewegungseinrichtung auf, mittels welcher wahlweise oder nacheinander die erste Kamera oder die zweite Kamera an der Mündungsöffnung platzierbar ist. Mittels der den Infrarotsensor aufweisenden zweiten Kamera kann ein Wärmebild des Garraums erstellt und insbesondere dem Nutzer angezeigt werden, welches sehr gute Rückschlüsse über den Zustand Garguts in dem Garraum zulässt. Und mittels der den Bildsensor aufweisenden ersten Kamera lassen sich Bilder von dem Gargut aufnehmen, welche dem Nutzer mittels der Anzeigeeinrichtung angezeigt werden können. Dies ist vorteilhaft.

Zusätzlich oder alternativ können die von der ersten Kamera und die von der zweiten Kamera erfassten Daten einer Steuerungseinrichtung des Gargeräts zugeführt werden, mittels welcher sich der Garvorgang des Garguts besonders einfach steuern lässt. Denn durch Auswertung der mittels der ersten Kamera und der zweiten Kamera erfassen Daten mittels der Steuerungseinrichtung lässt sich sehr einfach eine automatische Überwachung des Garprozesses realisieren. Dies macht das Zubereiten von Gargut für den Nutzer des Gargeräts besonders aufwandsarm und komfortabel.

Vorzugsweise weist das Gargerät eine Steuerungseinrichtung auf, welche dazu ausgebildet ist, ein Verbringen des Verschließelements aus der Schließstellung in die Freigabestellung und zurück in Abhängigkeit von einem Einschalten des Gargeräts und/oder in Abhängigkeit von einem Beenden des Garvorgangs zu bewirken.

Dem liegt die Erkenntnis zugrunde, dass es im Betrieb des Gargeräts zu einer Verschmutzung des Verschließelements kommen kann. Dies liegt darin begründet, dass es unter anderem eine der Aufgaben des Verschließelements ist, in der Schließstellung die Sensoreinrichtung vor einer Beaufschlagung mit Schmutz zu schützen. Durch ein von Zeit zu Zeit vorgenommenes Bewegen des Verschließelements aus der Freigabestellung in die Schließstellung und zurück lässt sich eine gute Leichtgängigkeit des Verschließelements bei derartigen Bewegungen sicherstellen. Zudem können so gegebenenfalls an dem Verschließelement angesammelte Ablagerungen oder Verschmutzungen abgestreift werden oder in Bereiche verdrängt werden, wo diese nicht störend sind. Insbesondere kann auf diese Weise ein Reinigen des Verschließelements erreicht werden.

Besonders einfach gestaltet es sich, wenn eine solche Reinigungsbewegung bei dem Einschalten des Gargeräts, insbesondere bei jedem Einschalten des Gargeräts, vorgenommen wird und/oder nach dem Beenden des Garvorgangs, insbesondere nach jedem Beenden des Garvorgangs. Denn so lässt sich ein regelmäßiges Bewegen des Verschließelements sicherstellen.

Mit Angaben wie "oben", "unten", "vorne", "hinten, "horizontal", "vertikal", "Tiefenrichtung", "Breitenrichtung", "Hochrichtung" und dergleichen sind die bei bestimmungsgemäßem Gebrauch und bestimmungsgemäßem Anordnen des Gargeräts und bei einem dann insbesondere vor dem Gargerät stehenden und in Richtung des Gargeräts blickenden Beobachter gegebenen Positionen und Orientierungen angegeben.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: stark schematisiert ein Gargerät in einer Perspektivansicht;
- Fig. 2: schematisch die Anordnung eines Doms des Gargeräts im Bereich einer Deckenwand einer Muffel des Gargeräts gemäß Fig. 1;
- Fig. 3: den Dom gemäß Fig. 2 in einer Ansicht vom Garraum her, wobei ein Verschließelement in eine Freigabestellung bewegt ist;
- Fig. 4: den Dom gemäß Fig. 2 in einer Ansicht vom Garraum her, wobei das Verschließelement in eine Schließstellung bewegt ist;
- Fig. 5: schematisch den Effekt des Vorsehens einer Vielzahl von Löchern oder dergleichen Durchtrittsöffnungen in einer Wandung des Doms;
- Fig. 6: schematisch die Anordnung des Verschließelements an einem oberen Ende des Doms;
- Fig. 7: schematisch die Anordnung des Verschließelements an einem unteren Ende des Doms;
- Fig. 8: schematisch eine im Wesentlichen mittige Anordnung des Verschließelements an dem Dom;
- Fig. 9: schematisch die Ausbildung von Durchtrittsöffnungen beziehungsweise Löchern in sämtlichen Wandungen des Doms;
- Fig. 10: schematisch das Absaugen von Wrasen aus einem Teilbereich des Doms mittels eines Lüfters des Gargeräts;
- Fig. 11: schematisch das Einstellen einer Durchströmung des Doms mit Kühlluft, wobei die Durchströmung mittels des Lüfters des Gargeräts bewirkt wird; und
- Fig. 12: schematisch eine Kombination des Absaugens von Heißluft und Wrasen aus dem Dom und eines Durchströmens des Doms mit Kühlluft in unterschiedlichen Ebenen oder Abschnitten des Doms.

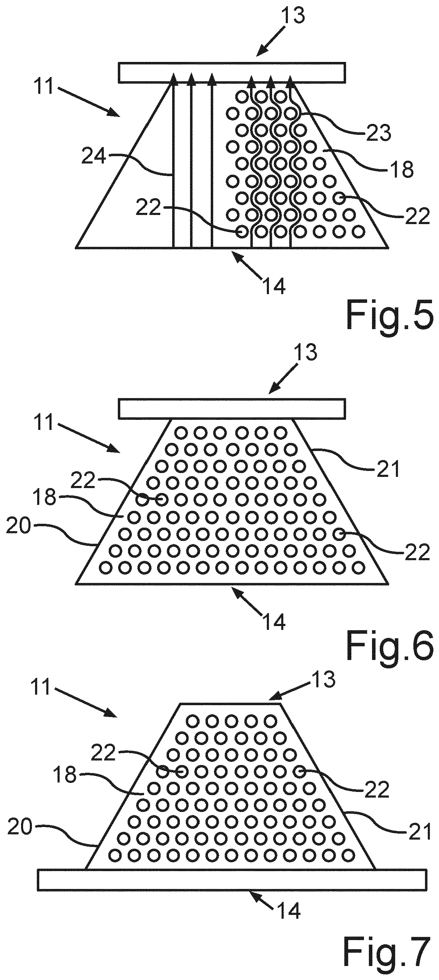

In den Figuren sind gleiche oder funktionsgleiche Elemente mit identischen Bezugszeichen versehen. Die in den Figuren 6, 7 und 10 dargestellten Alternativen sind nicht Teil der Erfindung.

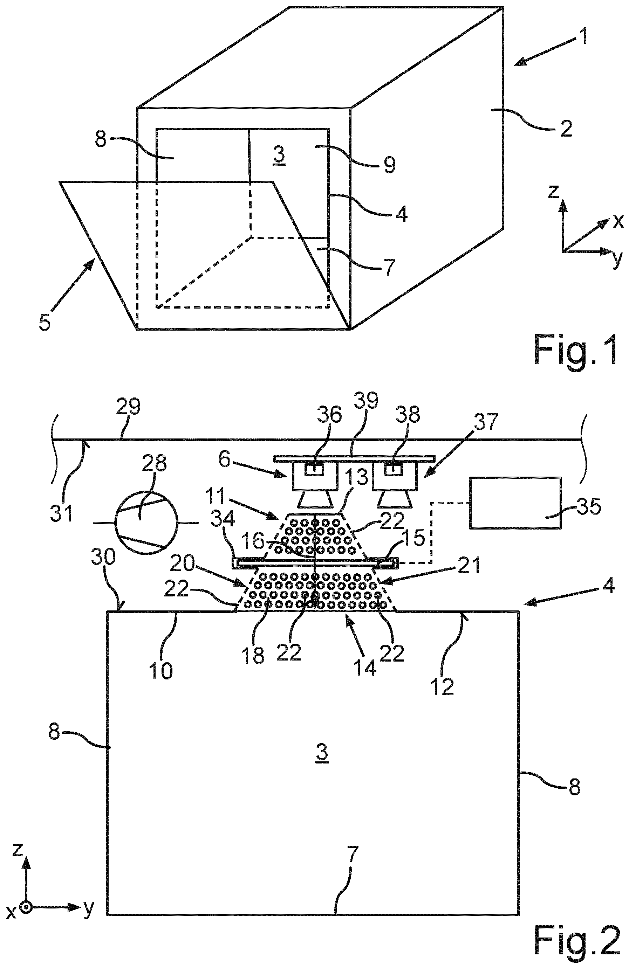

In Fig. 1 ist stark schematisiert ein Haushaltsgerät in Form eines Gargeräts 1 gezeigt, welches ein Gehäuse 2 oder Außengehäuse aufweist, das im Wesentlichen quaderförmig ausgebildet ist. In dem Gargerät 1 ist ein Garraum 3 ausgebildet, wobei der Garraum 3 durch Wände einer Muffel 4 des Gargeräts 1 begrenzt ist. Eine frontseitige Beschickungsöffnung der Muffel 4 ist mittels einer Tür 5 des Gargeräts 1 verschließbar, welche in Fig. 1 ein Stück weit geöffnet dargestellt ist. Die Wände der Muffel 4 umfassen gemäß Fig. 1 in Zusammenschau mit Fig. 2 einen Boden 7, zwei sich gegenüberliegende Seitenwände 8, eine Rückwand 9 und eine Deckenwand 10.

Zum Überwachen eines in dem Garraum 3 durchführbaren Garvorgangs weist das Gargerät 1 wenigstens eine Sensoreinrichtung auf. Als Beispiel für eine derartige Sensoreinrichtung ist in Fig. 2 eine erste Kamera 6 gezeigt, welche dazu ausgebildet ist, Bilder von Gargut aufzunehmen, welches sich während eines Garvorgangs in dem Garraum 3 befindet. Um eine Beaufschlagung der Sensoreinrichtung, vorliegend also beispielsweise der Kamera 6, mit Wärme aus dem Garraum 3 möglichst weitgehend zu unterbinden, weist das Gargerät 1 einen Dom 11 auf. Der Dom 11 sorgt dafür, dass die Kamera 6 von einer Innenseite 12 einer der Wände der Muffel 4 beabstandet ist, etwa von der Innenseite 12 der Deckenwand 10.

In Fig. 2 ist schematisch und beispielhaft gezeigt, dass der Dom 11 im Bereich der Deckenwand 10 angeordnet ist, sodass die Kamera 6 von oben in den Garraum 3 blicken kann. Der Dom 11 weist eine der Kamera 6 nahe Mündungsöffnung 13 auf und eine dem Garraum nahe Erfassungsöffnung 14. Vorliegend erweitert sich der Dom 11 von der Mündungsöffnung 13 hin zu der Erfassungsöffnung 14. Insbesondere kann der Dom 11, wie vorliegend beispielhaft gezeigt, nach Art eines Pyramidenstumpfes ausgebildet sein, wobei die Mündungsöffnung 13 und die Erfassungsöffnung 14 rechteckig, insbesondere quadratisch, ausgebildet sein können.

In Fig. 2 ist ein Verschließelement 15 schematisch gezeigt, welches in eine Schließstellung bewegt ist. In der Schließstellung versperrt das Verschließelement 15 einen Erfassungspfad 16, welcher von der Mündungsöffnung 13 zu der Erfassungsöffnung 14 reicht. Entlang dieses Erfassungspfads 16 kann die Kamera 6 in den Garraum 3 blicken beziehungsweise Bilder von dem sich in dem Garraum 3 befindenden (vorliegend nicht gezeigten) Gargut aufnehmen.

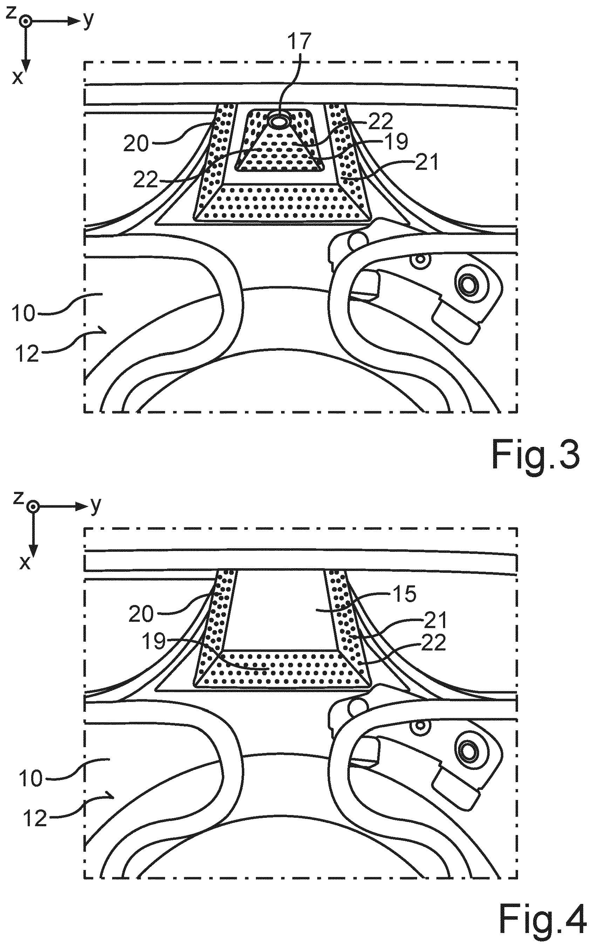

Wenn das Verschließelement 15 in eine Freigabestellung bewegt ist (vergleiche Fig. 3), so ist der Erfassungspfad 16 freigegeben. Dementsprechend ist in Fig. 3 ein dem Garraum 3 zugewandtes Objektiv 17 der Kamera 6 zu sehen. Wenn demgegenüber das Verschließelement 15 in eine Schließstellung bewegt ist (vergleiche Fig. 4), so verhindert das Verschließelement 15 wirkungsvoll eine Wärmeübertragung aus dem Garraum 3 hin zu der Kamera 6. Durch Verbringen des Verschließelements 15 in die Schließstellung (vergleiche Fig. 4) ist somit eine gute thermische Entkopplung der Kamera 6 von der Wärme des Garraums 3 sichergestellt.

Vorliegend ist diese thermische Entkopplung dadurch weiter verbessert, dass in wenigstens einer Wandung 18, 19, 20, 21 des Doms 11 eine Vielzahl von Durchtrittsöffnungen 22 ausgebildet sind. In Fig. 2 sind von den vorliegend vier Wandungen 18, 19, 20, 21 des Doms 11 eine in Querrichtung y des Garraums 3 und des Gargeräts 1 linke Wandung 20 sowie die gegenüberliegende rechte Wandung 21 zu sehen. Diese einander gegenüberliegenden Wandungen 20, 21 des Doms 11 sind auch in Fig. 3 und in Fig. 4 erkennbar.

In Fig. 2 ist des Weiteren die in Tiefenrichtung x des Gargeräts 1 und des Garraums 3 vordere Wandung 18 des Doms 11 zu sehen, während in Fig. 3 und in Fig. 4 die in Tiefenrichtung x des Gargeräts 1 sowie des Garraums 3 hintere Wandung 19 des Doms 11 zu erkennen ist. Die Querrichtung y, die Tiefenrichtung x sowie eine Hochrichtung z des Gargeräts 1 sowie des Garraums 3 sind etwa in Fig. 1 und Fig. 2 durch ein jeweiliges Koordinatensystem veranschaulicht.

Von den Durchtrittsöffnungen 22 sind in den Figuren aus Gründen der Übersichtlichkeit lediglich einige mit einem Bezugszeichen versehen. Insbesondere anhand von Fig. 5 lässt sich verdeutlichen, wie aufgrund des Vorsehens der Durchtrittsöffnungen 22 in wenigstens einer der Wandungen 18, 19, 20, 21 des Doms 11, beispielsweise in der in Fig. 5 gezeigten vorderen Wandung 18 des Doms 11, die Wärmeleitung von der Erfassungsöffnung 14 hin zu der Mündungsöffnung 13 verringert ist. Denn ein Weg 23, entlang welchem die Wärme von der Erfassungsöffnung 14 hin zu der Mündungsöffnung 13 aufgrund von Wärmeleitung gelangt, ist aufgrund des Vorsehens der Durchtrittsöffnungen 22 länger als ein in Fig. 5 ebenfalls gezeigter, geradliniger Weg 24.

In Fig. 2 ist eine Variante des Doms 11 gezeigt, bei welcher das Verschließelement 15 in Hochrichtung z des Doms 11 von der Mündungsöffnung 13 und von der Erfassungsöffnung 14 im Wesentlichen gleich weit beabstandet angeordnet ist. Demgegenüber ist in Fig. 6 eine nicht erfindungsgemäßen Variante des Doms 11 gezeigt, bei welcher das Verschließelement 15 an einem in Hochrichtung z oberen Ende des Doms 11, also im Bereich der Mündungsöffnung 13 des Doms 11, angeordnet ist. Und bei der nicht erfindungsgemäßen Variante des Doms 11 gemäß Fig. 7 ist das Verschließelement 15 in Hochrichtung z des Doms 11 unten angeordnet, also im Bereich der Erfassungsöffnung 14.

Aufgrund der sich vorliegend von der Mündungsöffnung 13 hin zu der Erfassungsöffnung 14 verbreiternden Gestaltung des Doms 11 hat das Anordnen des Verschließelements 15 oben (vergleiche Fig. 6) den Vorteil, dass auf diese Weise ein Hub beziehungsweise Verfahrweg zum Bewegen des Verschließelements 15 besonders gering ist. Des Weiteren verschmutzt das Verschließelement 15 weniger stark, da der Weg von der Erfassungsöffnung 14 zu dem Verschließelement 15 länger ist als bei der in Fig. 2 und in Fig. 7 gezeigten Variante der Anordnung des Verschließelements 15.

Demgegenüber hat die in Fig. 7 gezeigte Variante des Doms 11 den Vorteil, dass das Verschließelement 15 für eine besonders gute thermische Entkopplung sorgt. Jedoch ist hier das Verschließelement 15 großflächiger auszubilden, und zudem ist der Verfahrweg beziehungsweise der Hub des Verschließelements 15 größer als bei der in Fig. 6 gezeigten Variante des Doms 11.

Die sowohl von der Mündungsöffnung 13 als auch von der Erfassungsöffnung 14 beabstandete Anordnung des Verschließelements 15, insbesondere die in Fig. 2 gezeigte mittige Anordnung des Verschließelements 15, ermöglicht es, die jeweiligen Vorteile der in Fig. 6 und in Fig. 7 gezeigten Varianten besonders weitgehend zu vereinigen.

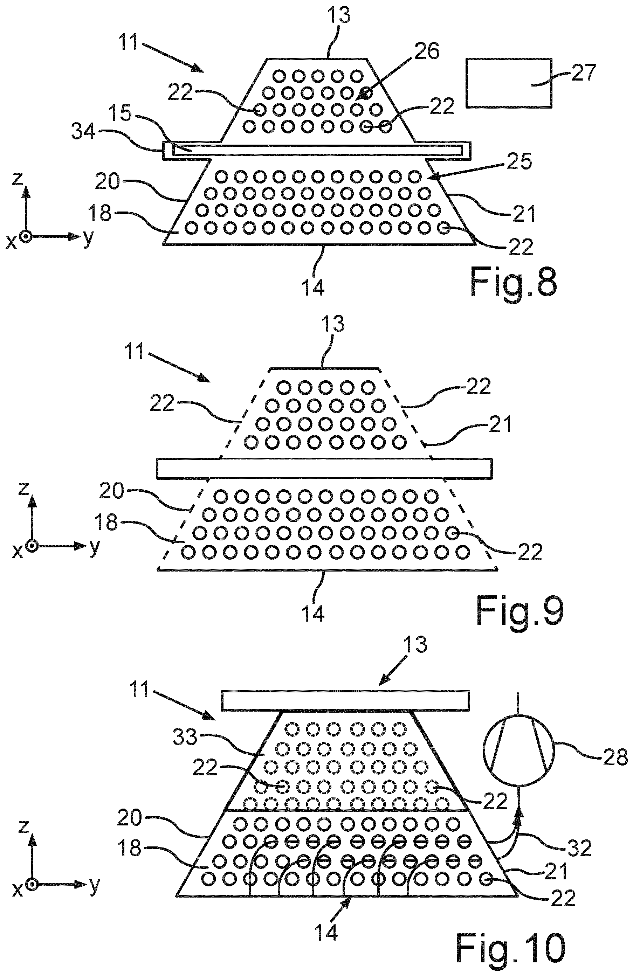

Bei der in Fig. 8 schematisch gezeigten, im Wesentlichen mittigen Anordnung des Verschließelements 15 bietet sich außerdem die Möglichkeit, jeweilige Abschnitte 25, 26 des Doms 11 aus unterschiedlichen, jeweils besonders gut geeigneten Materialien auszubilden. Beispielsweise kann der Dom 11 gemäß Fig. 8 einen ersten, dem Garraum 3 nahen Abschnitt 25 und einen zweiten, dem Garraum 3 fernen Abschnitt 26 aufweisen.

Wenn das Gargerät 1 einen in Fig. 8 schematisch gezeigten Mikrowellenerzeuger 27 aufweist, so ist es vorteilhaft, in dem vorliegend unteren Abschnitt 25, also beispielsweise in der unteren Domhälfte, die Wandungen 18, 19, 20, 21 metallisch auszubilden oder zumindest eine metallische Oberfläche oder Beschichtung eines Grundkörpers der jeweiligen Wandung 18, 19, 20, 21 vorzusehen. Denn so wird in dem ersten Abschnitt 25 Mikrowellenstrahlung besonders gut zurückgehalten. In der oberen Domhälfte beziehungsweise in dem zweiten Abschnitt 26 herrscht dann eine große Freiheit bei der Materialauswahl, weil in dem ersten Abschnitt 25 die Mikrowellenstrahlung ausreichend weit abgebaut ist.

Wenn demgegenüber das Gargerät 1 nicht den in Fig. 8 schematisch gezeigten Mikrowellenerzeuger 27 oder eine derartige Vorrichtung zum Beaufschlagen des Garraums 3 mit Mikrowellen aufweist, so kann beispielsweise der erste Abschnitt 25 aus einem schlecht wärmeleitenden Material wie etwa einem keramischen Material gebildet sein. Demgegenüber kann der zweite Abschnitt 26 des Doms 11 beispielsweise aus einem Metall oder aus einem Kunststoff gebildet sein, wobei letzteres insbesondere aus Kostengründen vorteilhaft ist.

Es kann vorgesehen sein, dass das Verschließelement 15 linear verfahrbar ist, um das Verschließelement 15 aus der Freigabestellung (vergleiche Fig. 3) in die Schließstellung (vergleiche Fig. 4) und zurück zu bewegen. Alternativ ist es möglich, dass das Verschließelement 15 beispielsweise um eine im Wesentlichen parallel zu der Hochrichtung z oder Hochachse oder Längsachse des Doms 11 (vergleiche Fig. 8) ausgerichtete Drehachse drehbar ist, um das Verschließelement 15 aus der Freigabestellung in die Schließstellung und zurück zu bewegen. Eine solche Drehbewegung des Verschließelements 15 um die Drehachse lässt sich mittels eines Aktuators wie etwa eines Elektromotors besonders einfach bewerkstelligen.

Die Durchtrittsöffnungen 22 oder Löcher in der wenigstens einen Wandung 18, 19, 20, 21 des Doms 11 können beispielsweise nur in dem ersten Abschnitt 25 ausgebildet sein oder nur in dem zweiten Abschnitt 26. Des Weiteren ist es möglich, die Durchtrittsöffnungen 22 sowohl unterhalb als auch oberhalb der gemäß Fig. 8 durch das Verschließelement 15 bereitgestellten Trennebene des Doms 11 vorzusehen, wie dies beispielhaft und schematisch in Fig. 8 gezeigt ist.

Außerdem können die Durchtrittsöffnungen 22 nur in einer der Wandungen 18, 19, 20, 21 oder beispielsweise in zwei sich gegenüberliegenden Wandungen 20, 21 oder in allen vier Wandungen 18, 19, 20, 21 des Doms 11 ausgebildet sein. Letzteres ist schematisch in Fig. 9 veranschaulicht. Demgegenüber sind bei der schematisch in Fig. 8 gezeigten Darstellung des Doms 11 die beiden einander in Querrichtung y des Doms 11 gegenüberliegenden Wandungen 20, 21 des Doms 11 nicht mit den Durchtrittsöffnungen 22 beziehungsweise Löchern versehen, sondern beispielsweise nur die in Tiefenrichtung x vordere Wandung 18 und/oder die in Tiefenrichtung x hintere Wandung 19, welche in Fig. 8 nicht zu sehen ist.

Je nachdem, welche der Wandungen 18, 19, 20, 21 mit den Durchtrittsöffnungen 22 versehen sind, lassen sich unterschiedliche Belüftungskonzepte realisieren. Dies soll insbesondere mit Bezug auf Fig. 10 bis Fig. 12 erläutert werden.

Gemäß Fig. 2 weist das Gargerät 1 vorliegend wenigstens einen Lüfter 28 auf, welcher in Fig. 2 lediglich schematisch und von der tatsächlichen Anordnung innerhalb des Gehäuses 2 her nicht realitätsgetreu dargestellt ist. In Fig. 2 ist von dem Gehäuse 2 des Gargeräts 1 lediglich eine obere Gehäusewand 29 schematisch und ausschnittsweise gezeigt. Der Lüfter 28 kann insbesondere in einem Teilraum des Gargeräts 1 angeordnet sein, welcher zwischen einer Außenseite 30 der Muffel 4 und einer Innenseite 31 des Gehäuses 2 ausgebildet ist (vergleiche Fig. 2). Der Lüfter 28 kann im Betrieb eine Luftströmung bereitstellen, etwa um die Tür 5 des Gargeräts 1 zu belüften und/oder um Wrasen aus dem Garraum 3 des Gargeräts 1 abzuführen. Die ohnehin durch den Lüfter 28 bereitgestellte Luftströmung wird vorliegend vorzugsweise mitgenutzt, um die wenigstens eine Sensoreinrichtung, also beispielsweise die Kamera 6, zu kühlen, und um Wärme und/oder Wrasen aus dem Bereich des Doms 11 abzuführen.

Beispielsweise ist in Fig. 10 ein Betrieb des Lüfters 28 veranschaulicht, bei welchem der Lüfter 28 Wrasen und/oder heiße Stauluft aus dem Innenraum des Doms 11 absaugt. Hierbei ist die Luftströmung beziehungsweise die über die Durchtrittsöffnungen 22 aus dem Dom 11 abgesaugte Luft durch Strömungslinien 32 veranschaulicht.

Insbesondere um eine Absaugung aus einem bestimmten Bereich des Doms 11 zu realisieren, kann zumindest ein Teilbereich der wenigstens einen Wandung 18, 19, 20, 21 des Doms 11 mittels eines Abdeckelements 33 verdeckt sein, welches in Fig. 10 lediglich schematisch dargestellt ist. Das Abdeckelement 33 kann beispielsweise aus einem Kunststoff gebildet sein.

Trotz des Vorsehens des Abdeckelements 33 sorgen die in der wenigstens einen Wandung 18, 19, 20, 21 des Doms 11 ausgebildeten Durchtrittsöffnungen 22 für ein Verringern der Wärmeleitung von der Erfassungsöffnung 14 des Doms 11 hin zu der Mündungsöffnung 13 des Doms 11. Das Abdeckelement 33 sorgt insbesondere dafür, dass die nicht verdeckten Durchtrittsöffnungen 22 zusätzlich als Luftdurchtrittsöffnungen wirksam sind, während alle Durchtrittsöffnungen 22 die Wärmeleitung unterbinden.

Bei dem in Fig. 10 schematisch gezeigten Dom 11 ist so wie in Fig. 6 gezeigt das Verschließelement 15 im Bereich der Mündungsöffnung 13 angeordnet. Jedoch kann das Verschließelement 15 auch bei dieser Variante so wie in Fig. 7 oder etwa in Fig. 8 und in Fig. 9 gezeigt in Hochrichtung z des Doms 11 von der Mündungsöffnung 13 und von der Erfassungsöffnung 14 beabstandet angeordnet sein.

Aus Fig. 2 und etwa aus Fig. 8 ist zudem ersichtlich, dass der Dom 11 zum Unterbringen des Verschließelements 15 eine taschenartige Aufnahme 34 aufweist, welche beispielsweise in wenigstens eine der Wandungen 18, 19, 20, 21 des Doms 11 integriert sein kann. Aus dieser taschenartigen Aufnahme 34 heraus wird das Verschließelement 15 in die etwa in Fig. 2 sowie in Fig. 4 oder in Fig. 8 gezeigte Schließstellung bewegt. Um das Verbringen des Verschließelements 15 in die Freigabestellung und die Schließstellung und zurück zu bewirken, kann das Gargerät 1 eine Steuerungseinrichtung 35 oder dergleichen Steuergerät aufweisen, wobei die Steuerungseinrichtung 35 in Fig. 2 stark schematisiert dargestellt ist.

Aus Fig. 2 ist weiter ersichtlich, dass die wenigstens eine Sensoreinrichtung des Gargeräts 1 die Kamera 6 umfassen kann, welche einen Bildsensor 36 aufweist. Mittels dieser (optischen) Kamera 6 können demnach Bilder von dem Gargut aufgenommen werden, welches sich in dem Garraum 3 befindet. Des Weiteren kann die Sensoreinrichtung des Gargeräts 1 eine zweite Kamera 37 umfassen, welche als Infrarotkamera ausgebildet ist und daher einen Infrarotsensor 38 aufweist. In Fig. 2 ist schematisch eine Bewegungseinrichtung 39 des Gargeräts 1 gezeigt, mittels welcher sich wahlweise oder nacheinander die erste Kamera 6 oder die zweite Kamera 37 an der Mündungsöffnung 13 des Doms 11 platzieren lässt.

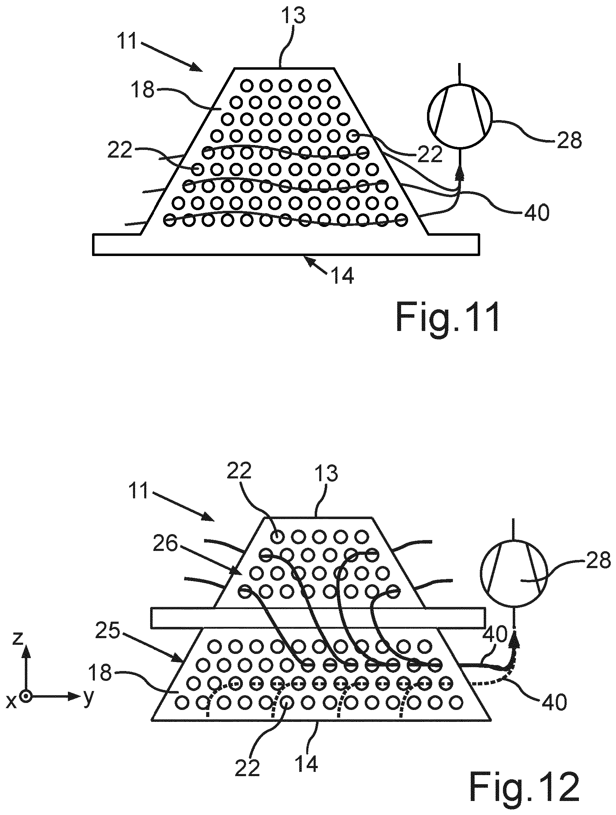

Bei dem in Fig. 11 schematisch dargestellten Betrieb des Lüfters 28 kann dafür gesorgt werden, dass der Innenraum des Doms 11 mit Kühlluft quergespült wird, etwa um eine Kühlung des Doms 11 zu erreichen. Auch hier ist, so wie in Fig. 12, die entsprechende Luftströmung durch Strömungslinien 40 veranschaulicht.

In Fig. 12 ist eine Betriebsweise des Lüfters 28 schematisch veranschaulicht, bei welcher der Lüfter 28 einerseits in dem unteren Abschnitt 25 des Doms 11 für eine Absaugung von Heißluft und/oder Wrasen aus dem Garraum 3 sorgt. Zugleich bewirkt der Lüfter 28 ein Hindurchströmen von Kühlluft durch den Dom 11 hindurch, insbesondere durch den oberen Abschnitt 26 des Doms 11.

Eine solche Strömungsführung oder Luftströmung kann beispielsweise erreicht werden, indem der Dom 11 in dem Teilraum zwischen der Innenseite 31 des Gehäuses 2 und der Außenseite 30 der Muffel 4, insbesondere zwischen der Innenseite 31 der oberen Gehäusewand 29 des Gehäuses 2 und der Außenseite 30 der Deckenwand 10 der Muffel 4 (vergleiche Fig. 2), so angeordnet ist, dass der in Hochrichtung z des Doms 11 untere Abschnitt 25 des Doms 11 von einer Saugseite des Lüfters 28 beeinflusst wird, während der obere Abschnitt 26 des Doms 11 mit der von einer Druckseite des Lüfters 28 her kommenden Luft beaufschlagt wird.

In vorteilhafter Weise kann bei dem Gargerät 1 insbesondere vorgesehen sein, dass die sich ohnehin in dem Teilraum des Gargeräts 1 im Betrieb des Lüfters 28 einstellende Kühlluftströmung genutzt wird, um zugleich eine entsprechende, forcierte Bewegung der Luftströmung im Bereich des Doms 11 zu bewirken. Beispielsweise können über den Bernoulli-Effekt im Bereich des Doms 11 lokale Unterdruckfelder erzeugt werden, sodass ein Ansaugen von Luft stattfindet. Zusätzlich oder alternativ kann ein aktives Anblasen des Doms 11 dazu führen, dass aufgrund eines Überdrucks eine Durchströmung des Doms 11 erreicht wird.

Es besteht demnach insbesondere die Möglichkeit, über eine Teilhabe an einem übergeordneten Strömungssystem des Gargeräts 1, welches durch den Lüfter 28 erzeugt wird, sowohl die Kühlung des Doms 11 sowie der wenigstens einen Sensoreinrichtung etwa in Form der ersten Kamera 6 und/oder der zweiten Kamera 37 zu bewirken, als auch den Abtransport von Wrasen aus dem Garraum 3.

Insgesamt zeigen die Beispiele, wie eine verbesserte Kühlung einer durch den Dom 11 bereitgestellten Sensorträgereinheit des erfindungsgemäßen Gargeräts bereitgestellt werden kann.

### Bezugszeichenliste

- 1: Gargerät
- 2: Gehäuse
- 3: Garraum
- 4: Muffel
- 5: Tür
- 6: Kamera
- 7: Boden
- 8: Seitenwand
- 9: Rückwand
- 10: Deckenwand
- 11: Dom
- 12: Innenseite
- 13: Mündungsöffnung
- 14: Erfassungsöffnung
- 15: Verschließelement
- 16: Erfassungspfad
- 17: Objektiv
- 18: Wandung
- 19: Wandung
- 20: Wandung
- 21: Wandung
- 22: Durchtrittsöffnung
- 23: Weg
- 24: Weg
- 25: Abschnitt
- 26: Abschnitt
- 27: Mikrowellenerzeuger
- 28: Lüfter
- 29: Gehäusewand
- 30: Außenseite
- 31: Innenseite
- 32: Strömungslinie
- 33: Abdeckelement
- 34: Aufnahme
- 35: Steuerungseinrichtung
- 36: Bildsensor
- 37: Kamera
- 38: Infrarotsensor
- 39: Bewegungseinrichtung
- 40: Strömungslinie
- x: Tiefenrichtung
- y: Querrichtung
- z: Hochrichtung

## Patentansprüche

1. Gargerät (1) mit einem Gehäuse (2), in welchem ein Garraum (3) ausgebildet ist, wobei der Garraum (3) durch Wände einer Muffel (4) des Gargeräts (1) begrenzt ist, mit wenigstens einer Sensoreinrichtung (6, 37), welche zum Überwachen eines in dem Garraum (3) durchführbaren Garvorgangs ausgebildet ist, wobei die wenigstens eine Sensoreinrichtung (6, 37) mittels eines Doms (11) des Gargeräts (1) von einer Innenseite (12) einer Wand (10) der Muffel (4) beabstandet ist, wobei der Dom (11) eine der wenigstens einen Sensoreinrichtung (6, 37) nahe Mündungsöffnung (13) und eine dem Garraum (3) nahe Erfassungsöffnung (14) aufweist, und mit einem Verschließelement (15), welches aus einer Freigabestellung in eine Schließstellung bewegbar ist, wobei in der Freigabestellung ein von der Mündungsöffnung (13) zu der Erfassungsöffnung (14) reichender Erfassungspfad (16) freigegeben ist, wobei durch Bewegen des Verschließelements (15) in die Schließstellung ein Ausmaß einer Wärmeübertragung aus dem Garraum (3) hin zu der wenigstens einen Sensoreinrichtung (6, 37) verringerbar ist, und wobei wenigstens eine Wandung (18, 19, 20, 21) des Doms (11), welche einen Innenraum des Doms (11) begrenzt, eine Vielzahl von Durchtrittsöffnungen (22) aufweist, **dadurch gekennzeichnet, dass** das in die Schließstellung bewegte Verschließelement (15) in Hochrichtung (z) des Doms (11) von der Mündungsöffnung (13) und von der Erfassungsöffnung (14) beabstandet angeordnet ist, wobei das Verschließelement (15) in Hochrichtung (z) des Doms (11) zwischen der Mündungsöffnung (13) und der Erfassungsöffnung (14) angeordnet ist.

2. Gargerät (1) nach Anspruch 1, **dadurch gekennzeichnet, dass** das in die Schließstellung bewegte Verschließelement (15) bezogen auf einen Abstand der Mündungsöffnung (13) von der Erfassungsöffnung (14) im Wesentlichen mittig angeordnet ist.

3. Gargerät (1) nach einem der vorhergehenden Ansprüche, **dadurch gekennzeichnet, dass** die wenigstens eine Wandung (18, 19, 20, 21) des Doms (11) in einem dem Garraum (3) nahen Teilbereich und/oder in einem dem Garraum (3) fernen Teilbereich die Durchtrittsöffnungen (22) aufweist.

4. Gargerät (1) nach einem der vorhergehenden Ansprüche, **dadurch gekennzeichnet, dass** der Dom (11) eine Mehrzahl von einander zugewandten, insbesondere quer zu dem Erfassungspfad (16) einander gegenüberliegenden, Wandungen (18, 18, 20, 21) aufweist, wobei nur eine dieser Wandungen (18, 19, 20, 21) die Durchtrittsöffnungen (22) aufweist oder zwei dieser Wandungen (18, 19, 20, 21) die Durchtrittsöffnungen (22) aufweisen oder alle Wandungen (18, 19, 20, 21) die Durchtrittsöffnungen (22) aufweisen.

5. Gargerät (1) nach einem der vorhergehenden Ansprüche, **dadurch gekennzeichnet, dass** das Gargerät (1) wenigstens einen Lüfter (28) aufweist, welcher dazu ausgebildet ist, in einem zwischen einer Außenseite (30) der Muffel (4) und einer Innenseite (31) des Gehäuses (2) angeordneten Teilraum des Gargeräts (1) eine Luftströmung bereitzustellen, wobei durch Betreiben des wenigstens einen Lüfters (28) mittels der Luftströmung ein Abführen von Wärme von dem Dom (11) und/oder von der wenigstens einen Sensoreinrichtung (6, 37) bewirkbar ist.

6. Gargerät (1) nach Anspruch 5, **dadurch gekennzeichnet, dass** mittels des Lüfters (28) ein Absaugen von Luft aus dem Innenraum des Doms (11) und/oder ein Einbringen von Luft in den Innenraum des Doms (11) bewirkbar ist.

7. Gargerät (1) nach Anspruch 5 oder 6, **dadurch gekennzeichnet, dass** mittels des Lüfters (28) ein Einbringen von Luft in den Innenraum des Doms (11) über die in einer ersten Wandung (20) des Doms (11) ausgebildeten Durchtrittsöffnungen (22) und ein Abführen der Luft über die in einer zweiten Wandung (21) des Doms (11) ausgebildeten Durchtrittsöffnungen (22) bewirkbar ist, wobei die erste Wandung (20) und die zweite Wandung (21) einander zugewandt sind.

8. Gargerät (1) nach einem der Ansprüche 5 bis 7, **dadurch gekennzeichnet, dass** zumindest in einem Teilbereich der Wandung (18, 19, 20, 21) die Durchtrittsöffnungen (22) mittels eines Abdeckelements (33) verdeckt sind, welches ein Hindurchtreten der Luftströmung durch diese Durchtrittsöffnungen (22) unterbindet.

9. Gargerät (1) nach einem der vorhergehenden Ansprüche, **dadurch gekennzeichnet, dass** der Dom (11) einen ersten, dem Garraum (3) nahen Abschnitt (25) und einen zweiten dem Garraum (3) fernen Abschnitt (26) aufweist, wobei die wenigstens eine Wandung (18, 19, 20, 21) in dem ersten Abschnitt (25) ein erstes Material aufweist und in dem zweiten Abschnitt (26) ein zweites Material aufweist, welches von dem ersten Material verschieden ist.

10. Gargerät (1) nach Anspruch 9, **dadurch gekennzeichnet, dass** das Gargerät (1) eine Vorrichtung (27) zum Beaufschlagen des Garraums (3) mit Mikrowellen aufweist, wobei der erste Abschnitt (25) eine metallische und/oder elektrisch leitfähige Beschaffenheit aufweist, durch welche ein Austreten von Mikrowellen über den Dom (11) in eine Umgebung des ersten Abschnitts (25) unterbindbar ist, oder das Gargerät (1) frei von einer Vorrichtung (27) zum Beaufschlagen des Garraums (3) mit Mikrowellen ist, wobei der erste Abschnitt (25) aus einem, insbesondere keramischen, Material gebildet ist, welches eine geringere Wärmeleitfähigkeit aufweist als ein für den zweiten Abschnitt (26) verwendetes Material.

11. Gargerät (1) nach einem der vorhergehenden Ansprüche, **dadurch gekennzeichnet, dass** das Verschließelement (15) zum Verbringen aus der Freigabestellung in die Schließstellung linear verfahrbar oder um eine Drehachse drehbar ist, wobei das Verschließelement (15) in der Freigabestellung in einer, insbesondere an einer Wandung (18, 19, 20, 21) des Doms (11) angeordneten, taschenartigen Aufnahme (34) untergebracht ist, und wobei das Verschließelement (15) in der Schließstellung zumindest einen Abschnitt des Doms (11) zu dem Garraum (3) hin abschirmt.

12. Gargerät (1) nach einem der vorhergehenden Ansprüche, **dadurch gekennzeichnet, dass** die wenigstens eine Sensoreinrichtung eine erste Kamera (6) mit einem Bildsensor (36) und eine zweite Kamera (37) mit einem Infrarotsensor (38) umfasst, wobei das Gargerät (1) eine Bewegungseinrichtung (39) aufweist, mittels welcher wahlweise oder nacheinander die erste Kamera (6) oder die zweite Kamera (37) an der Mündungsöffnung (13) platzierbar ist.

13. Gargerät (1) nach einem der vorhergehenden Ansprüche, **dadurch gekennzeichnet, dass** das Gargerät (1) eine Steuerungseinrichtung (35) aufweist, welche dazu ausgebildet ist, ein Verbringen des Verschließelements (15) aus der Schließstellung in die Freigabestellung und zurück in Abhängigkeit von einem Einschalten des Gargeräts (1) und/oder von einem Beenden des Garvorgangs zu bewirken.

## Claims

1. Cooking appliance (1) having a housing (2), in which a cooking chamber (3) is formed, wherein the cooking chamber (3) is delimited by walls of a muffle (4) of the cooking appliance (1), having at least one sensor device (6, 37) which is designed to monitor a cooking procedure which can be carried out in the cooking chamber (3), wherein the at least one sensor device (6, 37) is spaced apart from an inner side (12) of a wall (10) of the muffle (4) by means of a dome (11) of the cooking appliance (1), wherein the dome (11) has a feed opening (13) close to the at least one sensor device (6, 37) and a detection opening (14) close to the cooking chamber (3), and having a closure element (15) which is movable from a release position into a closed position, wherein in the release position a detection path (16) extending from the feed opening (13) to the detection opening (14) is released, and wherein by moving the closure element (15) into the closed position the extent of the heat transfer from the cooking chamber (3) to the at least one sensor device (6, 37) can be reduced, and wherein at least one wall (18, 19, 20, 21) of the dome (11), which delimits an inner space of the dome (11), has a plurality of through-openings (22), **characterised in that** the closure element (15) which is moved into the closed position is arranged spaced apart from the feed opening (13) and from the detection opening (14) in the vertical direction (z) of the dome (11), wherein the closure element (15) is arranged between the feed opening (13) and the detection opening (14) in the vertical direction (z) of the dome (11).

2. Cooking appliance (1) according to claim 1, **characterised in that** the closure element (15) which is moved into the closed position is arranged substantially centrally relative to a spacing of the feed opening (13) from the detection opening (14).

3. Cooking appliance (1) according to one of the preceding claims, **characterised in that** the at least one wall (18, 19, 20, 21) of the dome (11) has the through-openings (22) in a partial region close to the cooking chamber (3) and/or in a partial region remote from the cooking chamber (3).

4. Cooking appliance (1) according to one of the preceding claims, **characterised in that** the dome (11) has a plurality of walls (18, 18, 20, 21) facing one another, in particular opposing one another transversely to the detection path (16), wherein only one of these walls (18, 19, 20, 21) has the through-openings (22) or two of these walls (18, 19, 20, 21) have the through-openings (22) or all of the walls (18, 19, 20, 21) have the through-openings (22).

5. Cooking appliance (1) according to one of the preceding claims, **characterised in that** the cooking appliance (1) has at least one fan (28) which is designed to provide an air flow in a partial space of the cooking appliance (1) arranged between an outer side (30) of the muffle (4) and an inner side (31) of the housing (2), wherein a discharge of heat from the dome (11) and/or from the at least one sensor device (6, 37) can be brought about by means of the air flow by operating the at least one fan (28).

6. Cooking appliance (1) according to claim 5, **characterised in that** a suctioning of air from the inner space of the dome (11) and/or an introduction of air into the inner space of the dome (11) can be brought about by means of the fan (28).

7. Cooking appliance (1) according to claim 5 or 6, **characterised in that** an introduction of air into the inner space of the dome (11) via the through-openings (22) which are configured in a first wall (20) of the dome (11) and a discharge of the air via the through-openings (22) which are configured in a second wall (21) of the dome (11) can be brought about by means of the fan (28), wherein the first wall (20) and the second wall (21) face one another.

8. Cooking appliance (1) according to one of claims 5 to 7, **characterised in that** at least in a partial region of the wall (18, 19, 20, 21) the through-openings (22) are concealed by means of a cover element (33) which prevents the air flow from passing through these through-openings (22).

9. Cooking appliance (1) according to one of the preceding claims, **characterised in that** the dome (11) has a first portion (25) close to the cooking chamber (3) and a second portion (26) remote from the cooking chamber (3), wherein the at least one wall (18, 19, 20, 21) has a first material in the first portion (25) and has a second material, which is different from the first material, in the second portion (26).

10. Cooking appliance (1) according to claim 9, **characterised in that** the cooking appliance (1) has an apparatus (27) for the application of microwaves to the cooking chamber (3), wherein the first portion (25) has a metallic and/or electrically conductive nature by which it is possible to prevent an escape of microwaves via the dome (11) into an environment of the first portion (25), or the cooking appliance (1) does not have an apparatus (27) for the application of microwaves to the cooking chamber (3), wherein the first portion (25) is formed from, in particular, a ceramic material which has a lower heat conductivity than a material used for the second portion (26).

11. Cooking appliance (1) according to one of the preceding claims, **characterised in that** the closure element (15) is movable in a linear manner for moving from the release position into the closed position or is rotatable about an axis of rotation, wherein the closure element (15) in the release position is accommodated in a pocket-like receiver (34) which is arranged, in particular, on a wall (18, 19, 20, 21) of the dome (11), and wherein the closure element (15) in the closed position shields at least a portion of the dome (11) from the cooking chamber (3).

12. Cooking appliance (1) according to one of the preceding claims, **characterised in that** the at least one sensor device comprises a first camera (6) with an image sensor (36) and a second camera (37) with an infrared sensor (38), wherein the cooking appliance (1) has a movement device (39), the first camera (6) or the second camera (37) being able to be selectively or sequentially placed thereby on the feed opening (13).

13. Cooking appliance (1) according to one of the preceding claims, **characterised in that** the cooking appliance (1) has a control device (35), which is designed to bring about a movement of the closure element (15) from the closed position into the release position and back again, as a function of switching on the cooking appliance (1) and/or terminating the cooking procedure.

## Revendications

1. Appareil de cuisson (1) comprenant un boîtier (2), dans lequel est formée une chambre de cuisson (3), la chambre de cuisson (3) étant délimitée par des parois d'un moufle (4) de l'appareil de cuisson (1),
au moins un dispositif de détection (6, 37), qui est conçu pour surveiller un processus de cuisson susceptible d'être exécuté dans la chambre de cuisson (3), ledit au moins un dispositif de détection (6, 37) étant espacé d'un côté intérieur (12) d'une paroi (10) du moufle (4) par l'intermédiaire d'un dôme (11) de l'appareil de cuisson (1), le dôme présentant une ouverture de débouché (13) située à proximité dudit au moins un dispositif de détection (6, 37) et une ouverture de détection (14) située à proximité de la chambre de cuisson (3), et
un élément de fermeture (15), qui est mobile d'une position de libération à une position de fermeture,
dans lequel, dans la position de libération, un trajet de détection (16) s'étendant de l'ouverture de débouché (13) jusqu'à l'ouverture de détection (14) est dégagé,
dans lequel, par un déplacement de l'élément de fermeture (15) vers la position de fermeture, la quantité de transfert de chaleur de la chambre de cuisson (3) à l'au moins un dispositif de détection (6, 37) peut être réduite, et
dans lequel au moins une paroi (18, 19, 20, 21) du dôme (11) qui délimite un espace intérieur du dôme (11) comprend une pluralité d'orifices traversants (22),
**caractérisé en ce que** l'élément de fermeture (15), lorsqu'il est déplacé dans la position de fermeture, est disposé, dans la direction de hauteur (z) du dôme (11), à distance de l'ouverture de débouché (13) et de l'ouverture de détection (14),
dans lequel l'élément de fermeture (15) est disposé, dans la direction de hauteur (z) du dôme (11), entre l'ouverture de débouché (13) et l'ouverture de détection (14).

2. Appareil de cuisson (1) selon la revendication 1, **caractérisé en ce que** l'élément de fermeture (15), lorsqu'il est déplacé dans la position de fermeture, est disposé sensiblement à mi-distance entre l'ouverture de débouché (13) et l'ouverture de détection (14).

3. Appareil de cuisson (1) selon l'une des revendications précédentes, **caractérisé en ce que** l'au moins une paroi (18, 19, 20, 21) du dôme (11) comprend les orifices traversants (22) dans une partie proche de la chambre de cuisson (3) et/ou dans une partie éloignée de la chambre de cuisson (3).

4. Appareil de cuisson (1) selon l'une des revendications précédentes, **caractérisé en ce que** le dôme (11) comprend une pluralité de parois (18, 19, 20, 21) tournées les unes vers les autres, notamment opposées les unes vers les autres dans une direction transversale au trajet de détection (16), dans lequel une seule de ces parois (18, 19, 20, 21) comprend les orifices traversants (22) ou deux de ces parois (18, 19, 20, 21) comprennent les orifices traversants (22) ou toutes les parois (18, 19, 20, 21) comprennent les orifices traversants (22).

5. Appareil de cuisson (1) selon l'une des revendications précédentes, **caractérisé en ce que** l'appareil de cuisson (1) comprend au moins un ventilateur (28), qui est configuré pour produire un flux d'air dans une zone de l'appareil de cuisson (1) située entre un côté extérieur (30) du moufle (4) et un côté intérieur (31) du boîtier (2), dans lequel, lors du fonctionnement dudit au moins un ventilateur (28), une évacuation de la chaleur du dôme (11) et/ou de l'au moins un dispositif de détection (6, 37) peut être provoquée au moyen du flux d'air.

6. Appareil de cuisson (1) selon la revendication 5, **caractérisé en ce qu'**une aspiration d'air depuis l'espace intérieur du dôme (11) et/ou une introduction d'air dans l'espace intérieur du dôme (11) peut être réalisée au moyen du ventilateur (28).

7. Appareil de cuisson (1) selon la revendication 5 ou 6, **caractérisé en ce qu'**une introduction d'air dans l'espace intérieur du dôme (11) à travers les orifices traversants (22) formés dans une première paroi (20) du dôme (11) et une évacuation d'air à travers les orifices traversants (22) formés dans une deuxième paroi (21) du dôme (11) peuvent être provoquées au moyen du ventilateur, la première paroi (20) et la deuxième paroi (21) étant orientées l'une vers l'autre.

8. Appareil de cuisson (1) selon l'une des revendications 5 à 7, **caractérisé en ce qu'**au moins dans une partie de la paroi (18, 19, 20, 21), les orifices traversants (22) sont recouverts par un élément de recouvrement (33), qui empêche le passage du flux d'air à travers ces orifices traversants (22).

9. Appareil de cuisson (1) selon l'une des revendications précédentes, **caractérisé en ce que** le dôme (11) comprend une première section (25) proche de la chambre de cuisson (3) et une deuxième section (26) éloignée de la chambre de cuisson (3), dans lequel l'au moins une paroi (18, 19, 20, 21) comprend un premier matériau dans la première section (25) et un deuxième matériau dans la deuxième section (26) qui est différent du premier matériau.

10. Appareil de cuisson (1) selon la revendication 9, **caractérisé en ce que** l'appareil de cuisson (1) comprend un dispositif (27) destiné à soumettre la chambre de cuisson (3) à des micro-ondes,
dans lequel la première section est de nature métallique et/ou électriquement conductrice, par laquelle une fuite de micro-ondes à travers le dôme (11) au voisinage de la première section (25) peut être empêchée,
ou l'appareil de cuisson (1) ne comprend pas de dispositif (27) destiné à soumettre la chambre de cuisson (3) à des micro-ondes, la première section (25) étant constituée d'un matériau, notamment d'un matériau céramique, qui présente une conductivité thermique inférieure à celle d'un matériau utilisé pour la deuxième section (26).

11. Appareil de cuisson (1) selon l'une des revendications précédentes, **caractérisé en ce que** l'élément de fermeture (15) est déplaçable de façon linéaire ou est pivotable autour d'un axe de rotation pour l'amener de la position de libération à la position de fermeture,
dans lequel l'élément de fermeture (15), dans sa position de libération, est reçu dans un logement (34) en forme de poche disposé notamment au niveau d'une paroi (18, 19, 20, 21) du dôme (11), et
dans lequel l'élément de fermeture (15), dans sa position de fermeture, fait écran au niveau d'au moins une section du dôme (11) vis-à-vis de la chambre de cuisson (3).

12. Appareil de cuisson (1) selon l'une des revendications précédentes, **caractérisé en ce que** l'au moins un dispositif de détection comprend une première caméra (6) comportant un capteur d'image (36) et une deuxième caméra (37) comportant un capteur infrarouge (38), dans lequel l'appareil de cuisson (1) comprend un dispositif de déplacement (39), au moyen duquel, sélectivement ou l'une après l'autre, la première caméra (6) ou la deuxième caméra (37) peuvent être placées au niveau de l'ouverture de débouché (13).

13. Appareil de cuisson (1) selon l'une des revendications précédentes, **caractérisé en ce que** l'appareil de cuisson (1) comprend un dispositif de commande (35), qui est configuré pour provoquer un déplacement de l'élément de fermeture (15) de la position de fermeture jusqu'en position de libération et inversement en fonction d'une mise en marche de l'appareil de cuisson (1) et/ou d'un arrêt du processus de cuisson.
